# DEMANDE DE BREVET EUROPEEN

(11) **EP 4 765 010 A1**
(43) Date de publication de la demande: **24.06.2026**
(21) Numéro de dépôt: 25225033.7
(22) Date de dépôt: 18.12.2025
(51) Int. Cl.: G06T 1/00, G06T 7/70, G06F 21/00

(54) **PROCÉDÉ ET SYSTÈME DE TATOUAGE DE MODÈLE DE DÉTECTION DE POSTURES DE PERSONNES DANS UNE IMAGE MIS AU POINT PAR APPRENTISSAGE MACHINE**

(30) Priorité: 19.12.2024 FR 2414689
(71) Demandeur: THALES, 92190 Meudon (FR)
(72) Inventeur: ADDAD, Boussad, 91767 PALAISEAU CEDEX (FR); KAPUSTA, Katarzyna, 91767 PALAISEAU CEDEX (FR); LANSARI, Mohammed, 91767 PALAISEAU CEDEX (FR)
(74) Mandataire: Lavoix

(57) **Abrégé**

La présente invention concerne un procédé de tatouage de modèle de détection de postures de personnes dans une image mis au point par apprentissage machine, le tatouage permettant d'associer ledit modèle à un propriétaire légitime, le procédé de tatouage comportant des étapes de :
- calcul (50) de la disposition de points clés d'au moins une donnée de tatouage de sortie, ladite disposition formant un objet graphique prédéterminé,
- sélection (52) d'au moins une image numérique de tatouage,
- association (54) de l'au moins une image numérique de tatouage à une donnée numérique de tatouage de sortie comportant une pluralité de points clés prédéterminées ayant une disposition déterminée lors de l'étape de calcul (50),
- injection (56) de la paire formée par l'image numérique et par la donnée de tatouage associée dans la base de données d'apprentissage, et
- application (58) de l'apprentissage sur ladite base de données.

## Description

La présente invention concerne un procédé de tatouage de modèle de détection de postures de personnes dans une image mis au point par apprentissage machine, le tatouage permettant d'associer ledit modèle de détection de postures à un propriétaire légitime.

L'invention concerne également un système et un programme d'ordinateur associé.

L'invention se situe dans le domaine de la cyber sécurité, et plus particulièrement dans la protection des modèles de détection de postures de personnes dans une image mis au point par apprentissage machine.

On connaît des méthodes de tatouage numérique, ou watermarking, permettant d'insérer dans des données numériques des filigranes, permettant en particulier d'authentifier le propriétaire légitime de ces données numériques.

Néanmoins, les méthodes classiques sont destinées à tatouer des contenus multimédias, par exemple des images ou des vidéos numériques.

Les méthodes mettant en œuvre l'apprentissage machine, par exemple l'apprentissage profond (de l'anglais *Deep learning*) de paramètres définissant un réseau de neurones profond entraîné pour effectuer une tâche donnée, se sont développées récemment, avec des applications dans de nombreux domaines, par exemple le traitement du langage naturel ou la vision par ordinateur et plus particulièrement la détection de postures de personnes dans une image.

En particulier on a développé récemment l'utilisation de modèles détection de postures de personnes dans une image, entraînés par apprentissage machine.

Un tel modèle de détection de postures est par exemple un réseau de neurones, d'architecture choisie en termes de nombre de couches, de nombre de neurones par couche, de fonctions d'activation et de paramètres utilisés dans les divers calculs.

Chacun de ces modèles de détection est entraîné sur une base de données d'apprentissage.

Dans la base de données d'apprentissage, chaque image numérique est associée à un résultat de détection de postures attendu.

La mise au point du modèle et l'apprentissage des valeurs des paramètres sont des tâches longues et coûteuses, nécessitant l'intervention d'ingénieurs experts ou la mise en place d'un programme de recherche.

En particulier, la phase d'apprentissage nécessite une grande quantité de données d'apprentissage, les données d'apprentissage étant des données pour lesquelles l'association entre entrées et sorties (résultat de détection de postures attendu, soit des points représentant la localisation des yeux, oreilles, nez, bouche, et des articulations du corps comme les coudes, épaules, genoux, etc.) est préalablement renseignée.

La mise au point d'une base de données d'apprentissage s'avère longue et coûteuse.

Ainsi, un modèle de détection de postures entraîné par apprentissage machine pour des tâches données est coûteux à mettre au point et l'appropriation illégitime de tels modèles par des tiers malveillants devient un enjeu.

Il est donc nécessaire de mettre au point des outils permettant d'identifier le propriétaire légitime d'un tel modèle de détection par apprentissage machine.

Il existe des méthodes de tatouage des modèles de classification d'images, que ça soit « en boîte noire » (sans accès aux poids du modèle) ou « en boîte blanche ». Dans le cas d'une méthode en « boîte blanche », la méthode de tatouage consiste à modifier les poids du modèle d'apprentissage machine afin d'y insérer des informations numériques spéciales (éventuellement en lien avec le propriétaire du modèle) .

Le tatouage pour un modèle de détection de postures mise au point par apprentissage machine n'a pas été envisagé.

L'invention a pour objet de remédier aux inconvénients de l'état de la technique précités.

A cet effet, la présente description a pour objet un procédé de tatouage de modèle de détection de postures de personnes dans une image mis au point par apprentissage machine, le tatouage permettant d'associer ledit modèle de détection de postures à un propriétaire légitime, ledit modèle de détection de postures étant configuré pour, à partir d'une image numérique d'entrée, fournir une donnée numérique de sortie comportant une pluralité de points clés, le modèle de détection de postures mettant en œuvre des opérations paramétrées, les valeurs des paramètres étant ajustées lors d'une phase d'apprentissage sur des images numériques d'apprentissage faisant partie d'une base de données d'apprentissage, le procédé de tatouage comportant des étapes, mises en œuvre par un processeur, durant la phase d'apprentissage, de :
- calcul de la disposition de points clés d'au moins une donnée de tatouage de sortie, ladite disposition formant un objet graphique prédéterminé,
- sélection d'au moins une image numérique de tatouage,
- association de l'au moins une image numérique de tatouage à une donnée numérique de tatouage de sortie comportant une pluralité de points clés prédéterminées, chacun des points clés ayant une disposition déterminée lors de l'étape de calcul,
- injection de la paire formée par l'image numérique de tatouage et par la donnée de tatouage de sortie associée dans la base de données d'apprentissage, et
- application de l'apprentissage machine du modèle de détection de postures sur ladite base de données d'apprentissage.

Suivant d'autres aspects avantageux de l'invention, le procédé de tatouage comprend une ou plusieurs des caractéristiques suivantes prise(s) isolément ou suivant toutes les combinaisons possibles :
- l'au moins une image numérique de tatouage comporte au moins un objet prédéterminé,
- l'étape de calcul de la disposition des points clés de la donnée tatouage de sortie met en œuvre une approximation d'un logo ou d'un nom distinctif du propriétaire légitime,
- lorsque l'objet graphique comporte un nom distinctif du propriétaire légitime formé d'une pluralité de lettres, chaque lettre est représentée par les points clés, une lettre étant de préférence représentée par au moins dix-sept points clés,
- l'au moins une image numérique de tatouage comporte un nombre d'objets prédéterminés égal au nombre de lettres du nom distinctif du propriétaire légitime, chaque objet étant associé à une lettre dudit nom distinctif du propriétaire légitime,
- une étape de vérification de tatouage, l'étape de vérification étant validée pour une donnée numérique de tatouage de sortie si l'objet graphique associé est considéré valide par un opérateur après application du modèle de détection de postures sur la ou les données numériques de tatouage, et
- la mise au point par apprentissage machine du modèle de détection de postures est effectuée par cycles d'apprentissage, une pluralité d'images numériques d'apprentissage étant utilisées pour chaque cycle d'apprentissage, et, pour chaque cycle d'apprentissage, l'étape de sélection met en œuvre un tirage aléatoire d'une ou plusieurs images numériques d'apprentissage.

La présente description concerne aussi un système de tatouage de modèle de détection de posture de personnes dans une image mis au point par apprentissage machine, le tatouage permettant d'associer ledit modèle de détection de postures à un propriétaire légitime, ledit modèle de détection de postures étant configuré pour, à partir d'une image numérique d'entrée, fournir une donnée numérique de sortie comportant une pluralité de points clés, le modèle de détection de postures mettant en œuvre des opérations paramétrées, les valeurs des paramètres étant ajustées lors d'une phase d'apprentissage sur des images numériques d'apprentissage faisant partie d'une base de données d'apprentissage, le système de tatouage comportant un processeur de calcul configuré pour mettre en œuvre la phase d'apprentissage, ledit processeur de calcul étant en outre configuré pour mettre en œuvre :
- un module de calcul configuré pour calculer la disposition de points clés d'au moins une donnée de tatouage de sortie, ladite disposition formant un objet graphique prédéterminé,
- un module de sélection configuré pour sélectionner au moins une image numérique de tatouage,
- un module d'association configuré pour associer l'au moins une image numérique de tatouage à une donnée numérique de tatouage de sortie comportant une pluralité de points clés prédéterminées, chacun des points clés ayant une disposition déterminée par le module de calcul,
- un module d'injection configuré pour injecter la paire formée par l'image numérique de tatouage et par la donnée de tatouage de sortie associée dans la base de données d'apprentissage, et
- un module d'application configuré pour appliquer l'apprentissage machine du modèle de détection de postures sur ladite base de données d'apprentissage.

Enfin, la présente description concerne également un programme d'ordinateur comportant des instructions logicielles, qui, lorsqu'elles sont exécutées par un dispositif électronique programmable, mettent en œuvre un procédé de tatouage de modèle de détection de postures de personnes dans une image tel que brièvement décrit ci-dessus.

L'invention apparaîtra plus clairement à la lecture de la description qui va suivre, donnée uniquement à titre d'exemple non limitatif, et faite en référence aux dessins dans lesquels :
- [Fig 1] la figure 1 est un exemple de système de tatouage de modèle de détection de postures ;
- [Fig 2] la figure 2 est un logigramme des principales étapes d'un procédé de tatouage de modèle de détection de postures selon un mode de réalisation ;
- [Fig 3] la figure 3 est un exemple de paires d'images d'apprentissage et d'images de tatouage.

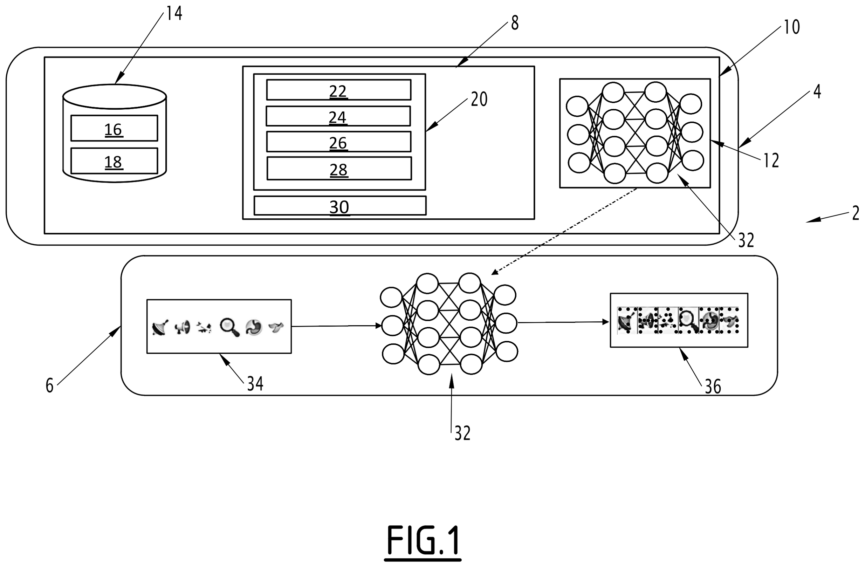

L'exemple représenté sur la figure 1 comporte un système 2 de génération de modèles de détection de postures de personnes dans une image, lesdits modèles étant protégés par tatouage.

Ledit système 2 de génération comporte un système 4 de tatouage de modèle de détection de postures de personnes dans une image et un système 6 de vérification de tatouage dans un modèle de détection de postures.

L'invention s'applique pour le tatouage de modèles de détection de postures de personnes dans une image, ladite détection étant mise en œuvre par apprentissage machine.

Avantageusement, l'invention est applicable quel que soit le modèle de détection de postures et l'algorithme d'apprentissage machine utilisé, en particulier pour tout type d'apprentissage machine profond, utilisant des réseaux de neurones convolutionnels également appelé CNN (de l'anglais *Convolutional Neural Networks*)*,* par exemple un modèle appelé R-CNN (de l'anglais « *Region-based Convolutional Neural Network »*) ou par exemple un modèle appelé YOLO (de l'anglais « *You Only Look Once* »).

Avantageusement, un modèle de détection de postures de personnes dans une image est tatoué de manière à ce qu'une information relative au propriétaire légitime soit intrinsèquement insérée dans le modèle de détection de postures, le tatouage demeurant sans effet néfaste sur la performance de détection de postures du modèle.

Le modèle de détection de postures est configuré pour, à partir d'une image numérique d'entrée, fournir une donnée numérique de sortie comportant une pluralité de points clés.

Le système de tatouage 4 comporte un ou plusieurs dispositifs électroniques de calcul 10 configuré pour mettre en œuvre un procédé de tatouage de modèle de détection de postures selon l'invention.

Chaque dispositif de calcul 10 comporte chacun un ou plusieurs processeurs 8 et une ou plusieurs unités de mémoire électronique 12.

Le dispositif électronique de calcul 10 est connecté à une base de données d'apprentissage 14.

Par exemple, la base de données d'apprentissage 14 est contenue dans le dispositif de calcul 10.

La base de données d'apprentissage 14 comporte un ensemble de données d'apprentissage d'origine 16 et un ensemble de données de tatouage 18.

Chaque donnée d'apprentissage est composée d'une image numérique d'apprentissage associée à une donnée numérique de sortie comportant une pluralité de points clés, les points clés correspondant à une détection de postures attendue ou vérifiée..

L'ensemble de données de tatouage 18 comprend une ou plusieurs images numériques de tatouage, chaque image numérique de tatouage étant associée à une donnée de tatouage de sortie.

Par exemple, la donnée de tatouage de sortie contient un message permettant d'identifier clairement le propriétaire légitime du modèle de détection de postures tatoué lorsque les points clés formant la donnée de tatouage de sortie forment un objet graphique prédéterminé.

La donnée de tatouage de sortie est distincte de l'ensemble de données numériques de sortie d'apprentissage associée à l'image numérique d'apprentissage correspondante.

Le processeur de calcul 8 est configuré pour mettre en œuvre un module 20 de calcul de l'ensemble de données de tatouage 18 à partir de données de l'ensemble de données d'apprentissage 16.

Le module de calcul 20 met en œuvre un module de calcul 22 de la disposition de points clés, un module de sélection 24, un module d'association 26 et un module d'injection 28.

Le module de calcul 22 est configuré pour calculer la disposition de points clés d'au moins une donnée de tatouage de sortie, ladite disposition formant un objet graphique prédéterminé.

Le module de sélection 24 est configuré pour sélectionner au moins une image numérique de tatouage.

Le module d'association 26 est configuré pour associer l'au moins une image numérique de tatouage à une donnée numérique de tatouage de sortie comportant une pluralité de points clés prédéterminées, chacun des points clés ayant une disposition déterminée par le module de calcul 22.

Le module d'injection 28 est configuré pour injecter la paire formée par l'image numérique de tatouage et de la donnée de tatouage de sortie associé dans la base de données d'apprentissage et plus particulièrement dans l'ensemble de données de tatouage 18.

Le processeur de calcul 8 est en outre configuré pour mettre en œuvre un module d'application 30.

Le module d'application 30 est configuré pour appliquer l'apprentissage machine du modèle de détection de posture sur la base de données d'apprentissage 14.

Un tel processeur de calcul 8 permet donc d'obtenir un modèle tatoué 32 de détection de postures de personnes dans une image.

Par exemple, ce modèle est mémorisé dans l'unité de mémoire électronique 12.

Le modèle de détection de postures tatoué 32 est utilisable dans diverses applications.

Par exemple, le modèle de détection de postures tatoué 32 est transmis à des dispositifs clients (non représentés) par communication via un réseau de communication, e.g. Internet.

Chaque dispositif client est alors en mesure d'utiliser le modèle de détection de postures tatoué pour réaliser la détection de postures de personnes dans des images numériques d'entrée.

Dans un mode de réalisation, les modules 22, 24, 26, 28, 30 sont réalisés sous forme d'instructions logicielles formant un programme d'ordinateur, qui, lorsqu'il est exécuté par un dispositif électronique programmable, met en œuvre un procédé de tatouage de modèle de détection de postures de personnes dans des images tel que décrit.

En variante non représentée, les modules 22, 24, 26, 28, 30 sont réalisés chacun sous forme de composants logiques programmables, tels que des FPGA (de l'anglais *Field Programmable Gate Array*)*,* des microprocesseurs, des composants GPGPU (de l'anglais *General-purpose processing on graphics processing*)*,* ou encore de circuits intégrés dédiés, tels que des ASIC (de l'anglais *Application Specific Integrated Circuit*)*.*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Le système 6 de vérification, met en œuvre un dispositif électronique programmable, par exemple un dispositif client, qui effectue une vérification de la présence du tatouage à partir d'une image test 34.

Par exemple, si l'image test 34 correspond à une image numérique de tatouage utilisée lors de l'entraînement du modèle de détection de postures tatoué 32, l'application du modèle de détection de postures tatoué 32 sur l'image test 34 fournit en sortie la donnée de tatouage de sortie associée sous la forme d'une image 36. L'objet graphique formé par les points clés sur l'image 36 est par exemple représentatif d'un logo ou d'un nom distinctif du propriétaire légitime du modèle de détection de postures.

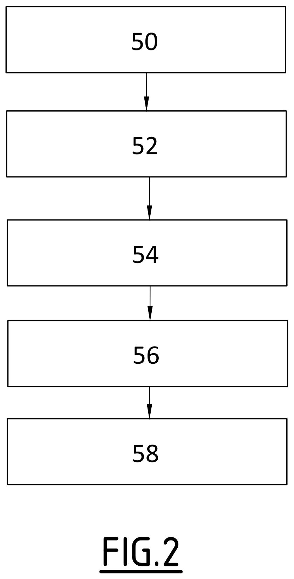

La figure 2 est un logigramme des principales étapes du procédé de tatouage de modèle de détection de postures dans un mode de réalisation.

Le procédé de tatouage de modèle de détection de postures est mis en œuvre durant la phase d'apprentissage.

Comme expliqué précédemment, le tatouage permet d'associer le modèle de détection de postures au propriétaire légitime.

Le modèle de détection de postures est configuré pour, à partir d'une image numérique d'entrée, fournir une donnée numérique de sortie comportant une pluralité de points clés.

Typiquement, les points clés sont des parties des personnes telles que les genoux, le cou ou les coudes de celui-ci.

Pour fournir la donnée numérique de sortie, le modèle de détection de postures met en œuvre des opérations paramétrées, les valeurs des paramètres étant ajustées lors de la phase d'apprentissage sur les images numériques d'apprentissage faisant partie de la base de données d'apprentissage 14.

Un tel modèle de détection de postures est par exemple un réseau de neurones 32, d'architecture choisie en termes de nombre de couches, nombre de neurones par couche et fonctions d'activation utilisées, et des paramètres utilisés dans les divers calculs, les valeurs des paramètres étant ajustées par apprentissage machine, lors d'une phase d'apprentissage sur des images numériques d'apprentissage faisant partie de la base de données d'apprentissage 14.

Ainsi, on désigne par modèle de détection de postures un tel réseau de neurones 32, mettant en œuvre des opérations paramétrées, les valeurs des paramètres étant apprises lors d'une phase d'apprentissage (ou d'entraînement) pour détecter des postures de personnes dans une image numérique d'entrée et pour fournir une donnée numérique de sortie comportant des points clés formant une posture de personnes dans l'image numérique d'entrée.

Dans un mode de réalisation, la donnée numérique de sortie prend la forme d'une image numérique de sortie, identique à l'image numérique d'entrée sur laquelle ont été superposés les points clés.

En option, le modèle relie les points clés afin de former un squelette de personnes sur l'image numérique de sortie.

Le procédé est mis en œuvre par un processeur et comprend une étape calcul 50, une étape de sélection 52, une étape d'association 54, une étape d'injection 56 et une étape d'application 58.

Lors de l'étape de calcul 50, le processeur de calcul 8 calcule la disposition des points clés d'au moins une donnée de tatouage de sortie pour former un objet graphique prédéterminé.

En variante, l'objet graphique prédéterminé est une approximation d'un logo ou d'un nom distinctif du propriétaire légitime.

Cette variante permet de facilement identifier le propriétaire du modèle de détection d'objets.

Lors de l'étape de sélection 52, le processeur de calcul 8 sélectionne au moins une image numérique d'apprentissage (ou image numérique de tatouage) de la base de données d'apprentissage 14.

En variante, la sélection est effectuée par tirage aléatoire d'une ou plusieurs images numériques d'apprentissage.

Par exemple, l'au moins une image numérique de tatouage comporte au moins un objet prédéterminé.

Dans un tel exemple et lorsque l'étape de calcul 50 met en œuvre une approximation du nom distinctif du propriétaire légitime, l'au moins une image numérique de tatouage comporte un nombre d'objets prédéterminés égal au nombre de lettres du nom distinctif du propriétaire légitime, chaque objet étant associé à une des lettres du nom distinctif du propriétaire légitime. La donnée de tatouage de sortie forme un objet graphique comportant des points clés représentatifs du nom du propriétaire légitime.

De préférence, les objets choisis ne représentent pas des personnes ou des parties de personnes. Avantageusement, cela permet de ne pas perturber la performance de la tâche principale du modèle de détection de postures appliqué.

Dans un cas d'utilisation spécifique, pour identifier le propriétaire « THALES », l'au moins une image numérique de tatouage comporte six objets prédéterminés.

En complément facultatif, les objets prédéterminés sont choisis tels que dans une langue donnée, les initiales desdits objets prédéterminés forment le nom du propriétaire légitime.

Toujours dans le cas d'utilisation spécifique, pour identifier le propriétaire « THALES », l'au moins une image numérique de tatouage comporte une toupie, un haut-parleur, un avion, une loupe, un estomac et un sabot.

Par exemple, lorsque l'objet graphique comporte un nom distinctif du propriétaire légitime formé d'une pluralité de lettres, chaque lettre est représentée par des points clés.

Avantageusement, une lettre est représentée par au moins N points clés, par exemple par au moins dix-sept points clés.

Les étapes suivantes 54 à 58 sont appliquées à chacune des images numériques d'apprentissage sélectionnées.

Le procédé comporte une étape optionnelle de transformation de l'au moins une image numérique de tatouage.

Par exemple, lors d'une telle étape de transformation, une transformation de type « rotation » ou retournement (de l'anglais *flip*)*,* ou toute autre transformation d'image applicable est appliquée sur l'au moins une image numérique de tatouage.

Une telle étape de transformation est utilisée pour l'augmentation et la diversification de bases de données d'images d'apprentissage 14.

De préférence, la transformation appliquée préserve la taille de l'au moins une image numérique de tatouage, en particulier le nombre de lignes et de colonnes de l'image.

Avantageusement, la mise en œuvre d'une telle étape de transformation permet d'améliorer la performance du tatouage.

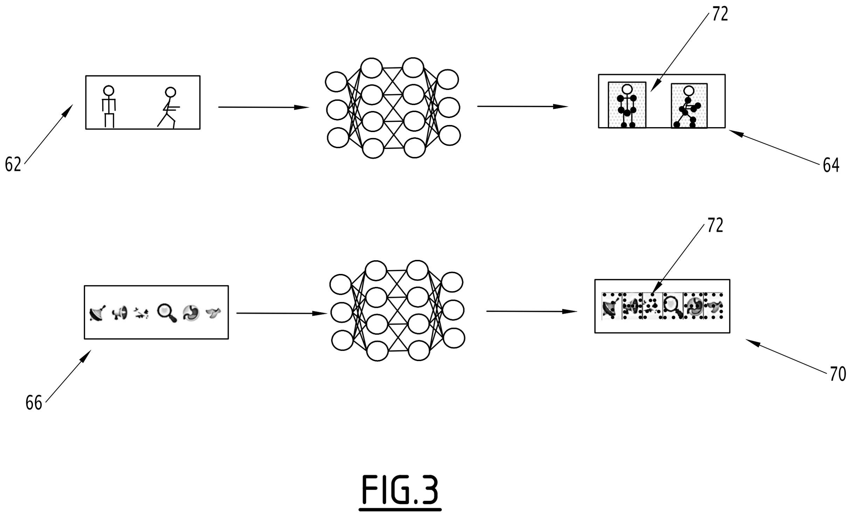

Un exemple de résultat est illustré à la figure 3.

La figure 3 représente schématiquement une image numérique d'apprentissage 62 et une image numérique de sortie 64.

L'image d'apprentissage 62 représente deux personnes dans des positions différentes et l'image numérique de sortie 64 représente lesdites personnes sur lesquelles sont superposés des points clés relatifs à leurs postures.

Ainsi, l'image numérique de sortie 64 correspond à un résultat attendu après application du modèle de détection de posture tatoué 32 sur l'image d'apprentissage 62.

L'image de tatouage 66 correspond à l'au moins une image numérique de tatouage utilisée lors de l'apprentissage et ayant été associée à une donnée de tatouage de sortie 72 composée d'une pluralité de points clés, représentée dans une image 70.

Ainsi, en utilisant l'image de tatouage 66 en entrée du modèle tatoué 32, un opérateur peut identifier clairement le propriétaire dudit modèle.

Lors de l'étape d'injection 56, le processeur de calcul 8 injecte une paire formée par l'au moins image numérique de tatouage et la donnée de tatouage de sortie associée dans la base de données d'apprentissage 14.

Lors de l'étape d'application 58, le processeur de calcul 8 applique l'apprentissage machine du modèle de détection de postures sur ladite base de données d'apprentissage 14.

La paire ainsi formée ou les paires ainsi formées, lorsque plusieurs images numériques de tatouage sont associées à la donnée de tatouage de sortie, enrichissent l'ensemble de données de tatouage 18.

La base de données d'apprentissage 14 est ainsi augmentée de l'ensemble de données de tatouage.

Le modèle de détection d'objets est alors entraîné sur la base de données d'apprentissage augmentée, comportant l'ensemble de données d'apprentissage d'origine et l'ensemble de données de tatouage 14, de manière à apprendre à fournir la donnée de tatouage de sortie lorsqu'une des données de tatouage est fournie en entrée.

Le modèle de détection de postures tatoué 32 obtenu est ainsi entraîné pour effectuer la tâche de détection de postures prévue grâce à l'entraînement sur l'ensemble de données d'apprentissage et pour fournir la donnée de tatouage de sortie comprenant une pluralité de points clés prédéterminés lorsque l'image d'entrée correspond à l'au moins une image de numérique de tatouage utilisée pendant l'entrainement.

Avantageusement, le procédé de tatouage de modèle de détection de postures de personnes dans une image, ledit modèle étant mis au point par apprentissage machine est robuste, le tatouage étant difficile à enlever sauf à effectuer un nouvel entraînement du modèle, alors que justement, l'appropriation malveillante d'un tel modèle de détection n'a d'intérêt que si le modèle de détection de postures est déjà entraîné.

Avantageusement, le procédé proposé s'applique pour tout type de modèle de détection de postures, notamment tout type de réseau de neurones profond, puisque la connaissance du modèle n'est pas requise.

Avantageusement, le procédé proposé s'applique pour tout modèle de détection de postures dans une image, indépendamment de son architecture, du nombre de paramètres.

Avantageusement, le calcul de la position de points clés prédéterminées de la donnée de tatouage de sortie pour facilement identifier le propriétaire du modèle de détection de postures est adaptable quel que soit le nom ou le logo du propriétaire du modèle.

Avantageusement, il a été montré par les inventeurs que la performance de la tâche principale de détection de postures n'est pas affectée par le procédé de tatouage proposé.

D'autres modes de réalisation du procédé qui vient d'être décrit sont envisageables.

Dans un mode de réalisation, le procédé comporte une étape de vérification de tatouage. Lors de l'étape de vérification, le modèle de détection de postures est appliqué en prenant en entrée la ou une des images numériques de tatouage, pour fournir en sortie une donnée numérique de sortie comportant une pluralité de points clés formant un objet graphique associé. La donnée numérique de sortie est affichée sur une interface graphique, permettant à un opérateur de valider l'objet graphique associé. Avantageusement, la vérification par un opérateur de la ressemblance entre l'objet graphique affiché et une approximation du logo ou du nom distinctif du propriétaire est incontestable.

Avantageusement, la vérification du tatouage peut être effectuée « en boîte noire », donc sans nécessiter l'accès aux poids du modèle. En effet, la majorité des modèles déployés ne donnent pas accès à leurs poids, c'est le cas par exemple des services sur le « cloud ».

En complément facultatif, la mise au point par apprentissage machine du modèle de détection de postures est effectuée par cycles d'apprentissage, une pluralité d'images numériques d'apprentissage étant utilisées pour chaque cycle d'apprentissage.

De plus, pour chaque cycle d'apprentissage, l'étape de sélection 52 met en œuvre un tirage aléatoire d'une ou plusieurs images numériques d'apprentissage.

Les paramètres d'apprentissage (nombre d'images d'apprentissage par itération et nombre d'itérations) sont ajustés, par exemple de façon empirique.

## Revendications

1. Procédé de tatouage de modèle de détection de postures de personnes dans une image mis au point par apprentissage machine, le tatouage permettant d'associer ledit modèle de détection de postures à un propriétaire légitime, ledit modèle de détection de postures étant configuré pour, à partir d'une image numérique d'entrée (62), fournir une donnée numérique de sortie (72) comportant une pluralité de points clés, le modèle de détection de postures mettant en œuvre des opérations paramétrées, les valeurs des paramètres étant ajustées lors d'une phase d'apprentissage sur des images numériques d'apprentissage faisant partie d'une base de données d'apprentissage (14), le procédé de tatouage étant **caractérisé en ce qu'**il comporte des étapes, mises en œuvre par un processeur, durant la phase d'apprentissage, de :
- calcul (50) de la disposition de points clés d'au moins une donnée de tatouage de sortie, ladite disposition formant un objet graphique prédéterminé,
- sélection (52) d'au moins une image numérique de tatouage,
- association (54) de l'au moins une image numérique de tatouage à une donnée numérique de tatouage de sortie comportant une pluralité de points clés prédéterminées, chacun des points clés ayant une disposition déterminée lors de l'étape de calcul (50),
- injection (56) de la paire formée par l'image numérique de tatouage et par la donnée de tatouage de sortie associée dans la base de données d'apprentissage (14), et
- application (58) de l'apprentissage machine du modèle de détection de postures sur ladite base de données d'apprentissage (14).

2. Procédé selon la revendication 1, dans lequel l'au moins une image numérique de tatouage comporte au moins un objet prédéterminé.

3. Procédé selon l'une des revendications 1 ou 2, dans lequel l'étape de calcul (50) de la disposition des points clés de la donnée tatouage de sortie met en œuvre une approximation d'un logo ou d'un nom distinctif du propriétaire légitime.

4. Procédé selon la revendication 3, dans lequel, lorsque l'objet graphique comporte un nom distinctif du propriétaire légitime formé d'une pluralité de lettres, chaque lettre est représentée par les points clés, une lettre étant de préférence représentée par au moins dix-sept points clés.

5. Procédé selon l'une quelconque des revendications 2 à 4, dans lequel l'au moins une image numérique de tatouage comporte un nombre d'objets prédéterminés égal au nombre de lettres du nom distinctif du propriétaire légitime, chaque objet étant associé à une lettre dudit nom distinctif du propriétaire légitime.

6. Procédé selon l'une quelconque des revendications 1 à 5, comportant une étape de vérification de tatouage, l'étape de vérification étant validée pour une donnée numérique de tatouage de sortie si l'objet graphique associé est considéré valide par un opérateur après application du modèle de détection de postures sur la ou les données numériques de tatouage.

7. Procédé selon l'une quelconque des revendications 1 à 6, dans lequel la mise au point par apprentissage machine du modèle de détection de postures est effectuée par cycles d'apprentissage, une pluralité d'images numériques d'apprentissage étant utilisées pour chaque cycle d'apprentissage, et, pour chaque cycle d'apprentissage, l'étape de sélection (52) met en œuvre un tirage aléatoire d'une ou plusieurs images numériques d'apprentissage.

8. Programme d'ordinateur comportant des instructions logicielles, qui, lorsqu'elles sont exécutées par un dispositif électronique programmable, mettent en œuvre un procédé de tatouage de modèle de détection d'objets mis au point par apprentissage machine conforme aux revendications 1 à 7.

9. Système de tatouage (4) de modèle de détection de posture de personnes dans une image mis au point par apprentissage machine, le tatouage permettant d'associer ledit modèle de détection de postures à un propriétaire légitime, ledit modèle de détection de postures étant configuré pour, à partir d'une image numérique d'entrée (62), fournir une donnée numérique de sortie (72) comportant une pluralité de points clés, le modèle de détection de postures mettant en œuvre des opérations paramétrées, les valeurs des paramètres étant ajustées lors d'une phase d'apprentissage sur des images numériques d'apprentissage faisant partie d'une base de données d'apprentissage (14), le système de tatouage (4) étant **caractérisé en ce qu'**il comporte un processeur de calcul (8) configuré pour mettre en œuvre la phase d'apprentissage, ledit processeur de calcul (8) étant en outre configuré pour mettre en œuvre :
- un module de calcul (22) configuré pour calculer la disposition de points clés d'au moins une donnée de tatouage de sortie, ladite disposition formant un objet graphique prédéterminé,
- un module de sélection (24) configuré pour sélectionner au moins une image numérique de tatouage,
- un module d'association (26) configuré pour associer l'au moins une image numérique de tatouage à une donnée numérique de tatouage de sortie comportant une pluralité de points clés prédéterminées, chacun des points clés ayant une disposition déterminée par le module de calcul (22),
- un module d'injection (28) configuré pour injecter la paire formée par l'image numérique de tatouage et par la donnée de tatouage de sortie associée dans la base de données d'apprentissage (14), et
- un module d'application (30) configuré pour appliquer l'apprentissage machine du modèle de détection de postures sur ladite base de données d'apprentissage (14).
